# EUROPEAN PATENT SPECIFICATION

(11) **EP 1 515 919 B1**
(45) Date of publication and mention of the grant of the patent: **08.03.2006**
(21) Application number: 02738030.2
(22) Date of filing: 03.05.2002
(51) Int. Cl.: C03B 37/014

(54) **BURNER ASSEMBLY FOR PRODUCING GLASS PREFORMS AND CORRESPONDING PRODUCTION PROCESS**
BRENNERANORDNUNG ZUR HERSTELLUNG VON VORFORMEN AUS GLAS UND ZUGEHÖRIGES PRODUKTIONSVERFAHREN
ENSEMBLE BRULEUR POUR LA PRODUCTION DE PREFORMES DE VERRE ET PROCEDE DE PRODUCTION CORRESPONDANT

(43) Date of publication of application: 23.03.2005
(73) Proprietor: Prysmian Cavi e Sistemi Energia S.r.l., 20126 Milano (IT)
(72) Inventor: NUTINI, Massimo, 20131 Milano (IT); HAYES, John, Fordingbridge, Hampshire SP6 1NG (GB)
(74) Representative: Bottero, Claudio
(86) International application number: PCT/EP2002/004883
(87) International publication number: WO 2003/093182

(56) References cited:
- EP-A- 0 185 106
- EP-A- 0 474 242
- US-A- 4 661 140
- US-A- 4 765 815
- US-A- 4 915 716
- PATENT ABSTRACTS OF JAPAN vol. 014, no. 427 (C-0758), 13 September 1990 (1990-09-13) & JP 02 164733 A (SUMITOMO ELECTRIC IND LTD), 25 June 1990 (1990-06-25)
- PATENT ABSTRACTS OF JAPAN vol. 014, no. 306 (C-0735), 3 July 1990 (1990-07-03) & JP 02 102146 A (SUMITOMO ELECTRIC IND LTD), 13 April 1990 (1990-04-13)
- PATENT ABSTRACTS OF JAPAN vol. 009, no. 260 (C-309), 17 October 1985 (1985-10-17) & JP 60 112636 A (NIPPON DENSHIN DENWA KOSHA), 19 June 1985 (1985-06-19)
- DATABASE WPI Section Ch, Week 198114 Derwent Publications Ltd., London, GB; Class L01, AN 1981-24324D XP002223679 & JP 56 014443 A (NIPPON TELEGRAPH & TELEPHONE CORP), 12 February 1981 (1981-02-12)

## Description

### Field of the invention

The present invention relates to a burner assembly for producing glass preforms, in particular optical fibre glass preforms, and to a corresponding production process.

### Background art

Optical fibres for telecommunication typically are high-purity, silica-based glass fibres drawn from glass preforms, which preforms can be produced according to various glass deposition techniques.

Some of these deposition techniques, including vapour axial deposition (VAD) and outside vapour deposition (OVD), require the use of a combustion burner for generating glass soot particles to be deposited. This burner is usually fed with a silica precursor, such as SiCl₄, together with combusting gases, so that a high temperature flow of forming fine glass (i.e. SiO₂) particles is generated. This flow is directed onto a rotating target for growing a glass soot preform, which is subsequently consolidated for obtaining a glass preform. Optionally, the burner may be fed also with a doping material, such as GeCl₄, for suitably modifying the refractive index of the glass.

According to the VAD deposition technique, the growth of the preform takes place in an axial direction. The deposition burner is typically maintained in a substantially fixed position, while the preform is rotated about its axis and is slowly moved upwards (or downwards) with respect to the burner, in order to cause the axial growth of the preform. Alternatively, the rotating preform can be maintained in a substantially fixed position, while the deposition burner is slowly moved downwards (or upwards) with respect to the preform.

Differently, in the OVD deposition technique, the growth of the preform takes place in a radial direction. In this process, a rotating target (e.g. a quartz glass rod) is generally positioned in a fixed horizontal or vertical position and the deposition burner is reciprocated parallel to the axis of the target while the target is set into rotation about its axis. The optical preform so produced comprises a core portion and a cladding portion having different chemical composition, so that a predetermined radial refractive index profile can be obtained.

In greater details, the deposition process is usually performed in two steps: a first step to form a core preform comprising the core and a first portion of the cladding, and a second step (called "overcladding.") for depositing a further glass layer onto the core preform, thus obtaining, a porous final preform.

At the end of each deposition step, the preform is consolidated. In particular, after the overcladding step, the porous final preform is consolidated to form a solid glass final preform suitable to be subsequently drawn into an optical fibre.

Conventional burners for manufacturing optical preforms comprise a plurality of co-axial tubular walls (or pipes) through which the glass precursor materials (i.e. silica precursors, such as SiCl₄, optionally together with dopants materials, such as GeCl₄), the combusting gases (e.g. oxygen and hydrogen or methane) and, optionally, some inert gas (e.g. argon or helium) are fed. Typically, the glass precursor material is fed through the duct defined by the central pipe, while other gases are fed through the annular ducts formed between the concentrically disposed pipes. The inlet of a duct will be herein after referred to also as "port", while the exit portion of a pipe will be referred to as "nozzle".

In order to improve the yield of the deposition process, research has been dedicated in recent years to increase the rate (g/min) at which the soot is synthesized and deposited for a unit time.

The problem of attaining a high synthesizing rate in the VAD process through an increase in the reaction efficiency is addressed in US 4,618,354. This patent relates to a multi-flame burner wherein the kth flame is positioned rearward of the (k+1)th flame so as to improve the deposition rate of fine glass particles. In particular, a double-flame burner apt to generate an inner flame and an outer flame is described, wherein the inner flame is spaced rearward of the outer flame.

**Fig. 1** shows (in partial view) a double-flame burner as described in US 4,618,354. Reference numeral 21 denotes a glass material supply orifice; 22 a combustible gas supply orifice for discharging a hydrogen gas; 23 an inert gas supply orifice for discharging He, Ar or N₂; 24 an auxiliary gas supply orifice for discharging O₂; and 25 another inert gas supply. Orifices 21-25 are concentrically disposed in the order of these reference numerals and constitute an inner multiple orifice assembly for forming an inner flame. The combustible gas is burned with the aid of the auxiliary gas to produce the inner flame. Reference numeral 26 denotes an inert gas supply orifice; 27 a combustible gas supply orifice; 28 another inert gas supply orifice; and 29 an auxiliary gas supply orifice. These orifices 26-29 are concentrically disposed around the orifice 25 in the order of these reference numerals and constitute an outer multiple orifice assembly for forming an outer flame. The combustible gas is burned with the aid of the auxiliary gas to produce the outer flame. The inner multiple orifice is spaced rearward of the outer multiple orifice assembly by a distance I.

Therefore, the gases fed through the orifices are, from the innermost port to the outermost port, a glass raw material, H₂, Ar, O₂, Ar, a glass raw material or Ar, H₂, Ar, and O₂, respectively.

As stated in US 4,618,354, the increase in flame length due to the presence of an outer flame results in an increase in the amount of the fine glass particles deposited.

This advantage is confirmed by EP 204 461, which states that, as a result of the use of a double-flame, the growth of glass fine particles in the flame is accelerated, the particles diameter increases and the accumulating efficiency is enhanced.

However, EP 204 461 notices that, when a doping raw material for forming a refractive index distribution is supplied to the burner, this material may be diffused more than required in the flame due to the long time it stays in the flame. Accordingly, EP 204 461 proposes a different VAD burner wherein the central pipe, through which a doping reactant (GeCl₄) is fed, is spaced forwardly with respect to the other pipes forming the inner flame, in order to reduce the staying time of the dopant inside the flame. In the burner described in EP 204 461, the gases that are fed to the different ducts are, from the innermost port to the outermost port, GeCl₄, SiCl₄ and H₂, Ar, O₂, Ar, Ar, SiCl₄ and H₂, Ar, O₂, respectively.

Some patents also disclose premixing the raw material with an appropriate gas, such as an Inert gas (EP 698 581), He (JP 2120251), O₂ (US 4,406,680) or H₂ (JP 55144433), for different purposes. In particular, JP 55144433 describes a five-layer single-flame burner wherein the raw material (SiCl₄) is fed with H₂ in the central duct and wherein the H₂ flow rate is varied to obtain, through a high-speed and stable production, an optical fiber having a specified refractive index distribution. H₂ is also added to GeCl₄ in a second layer and fed individually to a fourth layer, while the third and fifth layers are fed with an inert gas and O₂, respectively.

The Applicant has tackled the problem of further increasing the process yield in a VAD process, in particular the rate at which glass soot is synthesized and deposited.

The Applicant observes that a multi-flame burner is required for high-yield performances and that, in order to achieve a further increase of the deposition rate, an increase of the flow of raw material is also required. The Applicant is of the opinion that, in the techniques previously described making use of two flames, a further increase of the amount of raw material fed to the burner would result in a reduction of the deposition efficiency. In fact, in the use of the known burners, increasing the flow rate of raw material would also increase the turbulence and, consequently, both the confinement of silica particles and the extent of the laminar boundary layer on the soot target would be decreased. Furthermore, the efficiency of the reaction through which particles are formed would diminish, due to a reduced penetration of water and heat inside the central core of the stream of raw material, while both water and heat are necessary for the hydrolysis reaction of particles formation to occur efficiently.

The problem of an inward reduced penetration of water and heat also arises if the dimensions of the central duct of the burner are increased to maintain the exit velocity of glass raw material substantially constant, as a result of the increased dimensions of the flame. Moreover, an increase of the dimensions of the burner may result in a decrease in the particle collection efficiency, i.e. of the fraction of produced particles that impinge the deposition target.

In view of the above, it is an object of the invention to provide a process that allows stably growing a cylindrical porous soot preform with higher synthesizing and deposition rates, and a burner assembly for such a process.

### Summary of the invention

The Applicant has found that, in a deposition process performed by using a multi-flame burner, feeding a substantial amount of the combustible gas required for the central flame to the central duct of the burner together with the glass precursor material allows improving the glass soot synthesizing rate and the deposition rate. This improvement is due, according to the Applicant, to the fact that the inner flame generates internally the glass raw material stream, and the soot particle formation process takes places more efficiently.

A second flame surrounding the central one is provided for confining the first flame (which would otherwise tend to spread) and to assist the particle formation process, while a third (external) flame is advantageously provided for improving the thermophoretic effect on the growing preform surface during the particle deposition process and the confining effect on the particle stream.

In practice, the reaction inducing effect and the confining effect provided by the inner flame in a double-flame burner of a known type, wherein the inner flame is generated around the glass raw material stream, are provided by two different flames in the process of the present invention, wherein the inner flame is generated within the glass raw material stream. This results, first of all, in an increase of the synthesizing rate. Second, the reaction starts very close to the nozzles associated to the first flame, and the reaction time is therefore increased.

The third flame in the process of the present invention has substantially the same function of the second flame in the double-flame burners previously described.

The Applicant has verified that the improvement is maximum when the combustible gas and the glass precursor material are admixed in a molar concentration ratio between about 0.8 and 1.2, before being fed to the inner duct. Preferably, the whole amount of combustible gas of the first flame is admixed with the glass precursor material. Alternatively, a certain amount of combustible may be fed to a different duct of the burner, for example a duct immediately surrounding the central one, provided that the molar concentration ratio between the combustible gas and the glass precursor material in the central duct is at least 0.8.

One aspect of the present invention thus relates to a process for producing an optical fibre glass preform, comprising:
- providing a burner in the direction of a deposition target; and
- generating, by means of said burner, a first flame, a second flame surrounding the first flame and a third flame surrounding the first flame, wherein generating the first flame comprises feeding to said burner predetermined amounts of a combustible gas, a combustion sustaining gas and a glass precursor material, and wherein generating the first flame comprises feeding at least 30% by volume of said predetermined amount of said combustible gas to a central duct of said burner premixed with the glass precursor material.

Preferably, said fraction of combustible gas fed to the central duct is at least 60%, more preferably at least 90%. Still more preferably, all the combustible gas of the first flame is fed to the central duct together with the glass precursor material.

The Applicant has also found that the best performances are obtained when the combustible gas of the first flame and the glass precursor material are fed to the burner in a molar concentration ratio between about 0.8 and 1.2; more preferably, the combustible gas and the glass precursor material are premixed and fed to the central duct in a molar concentration ratio of at least 0.8, still more preferably of about 1.

Preferably, the step of generating the first flame further comprises feeding an inert gas to a second duct surrounding the central duct and feeding the combustion sustaining gas to a third duct surrounding the second duct.

Both steps of generating the second flame and generating the third flame may comprise premixing a combustible gas with an inert gas having a kinematic viscosity lower than that of oxygen.

In a second aspect thereof, the present invention relates to a burner assembly for generating a glass soot particle stream in a process for producing a glass optical fibre preform, the burner assembly comprising:
- a burner having a first, a second and a third set of ducts for generating an inner, an intermediate and a outer flame, respectively;
- a gas delivery system, comprising a source of a glass precursor material, a source of a combustible gas and a source of a combustion sustaining gas, and further comprising a mixer for creating a mixture of said glass precursor material and said combustible gas, the mixer being fluid connected to a central duct of the burner for feeding to the central duct said mixture.

Preferably, the central duct is the only duct of the first set of ducts that is fluid connected to a source of a combustible gas.

### Brief description of the drawings

Fig. 1 shows, in a partial cross-sectional view, a burner of a known type;
Fig. 2 is a schematic representation of a burner assembly according to the present invention, comprising a burner and a gas delivery system;
Fig. 3 is an illustrative representation of a deposition process for growing a glass soot preform;
Fig. 4 is a not-in-scale longitudinal section, according to plane IV-IV, of part of the burner of Fig. 2;
Fig. 5 is a not-in-scale cross-section, according to plane V-V, of the burner of Fig. 2;
Fig. 6 illustrates in a greater detail the gas delivery system of Fig. 2; and
Fig. 7 shows results of numerical simulations.

### Description of preferred embodiments

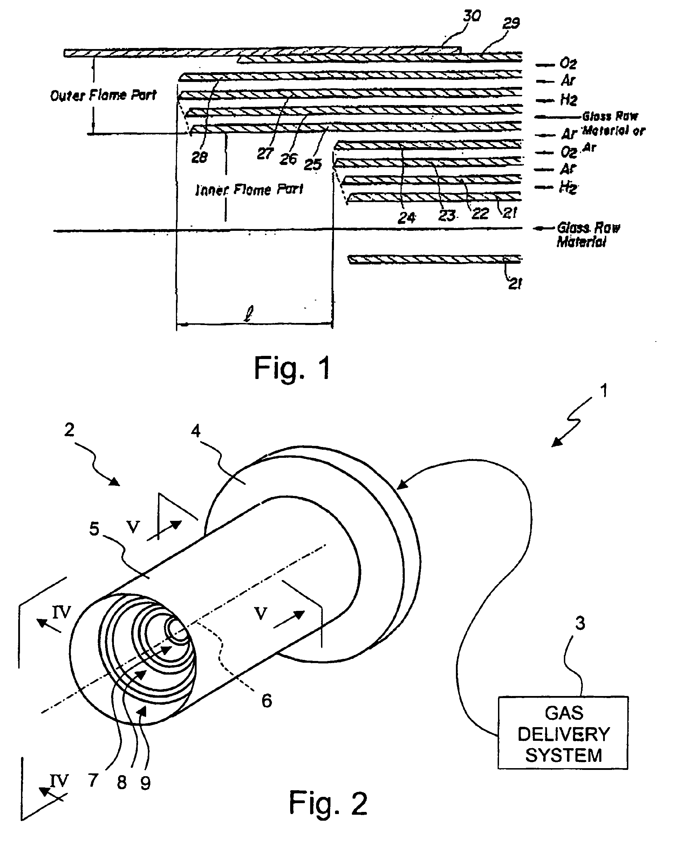

With reference to the illustrative and schematic view of **Fig. 2**, reference number 1 indicates a burner assembly according to the present invention, for synthesizing fine glass particles. Burner assembly 1 comprises a multi-flame burner 2 and a gas-delivery system 3 to furnish the gases to burner 2.

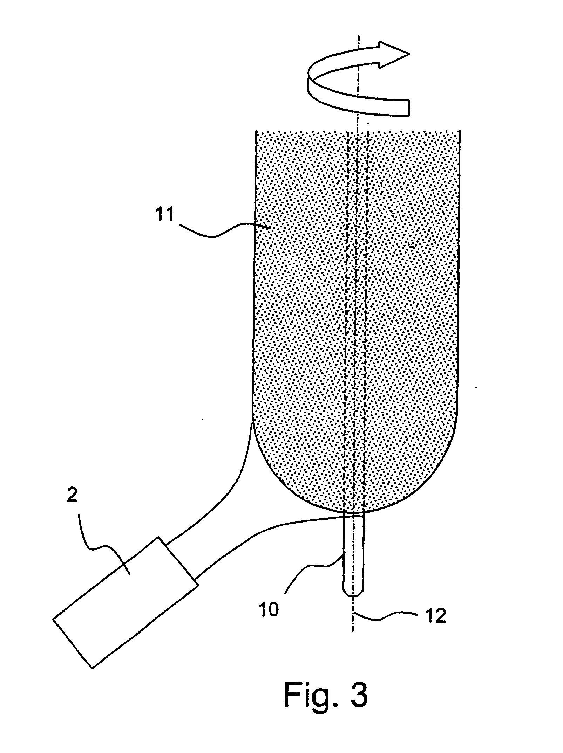

Burner 2, as described in the following, is preferably a triple-flame burner and is particularly suitable for use in an overcladding deposition process for producing a glass soot preform. In such a process, as shown in the illustrative representation of **Fig. 3**, the burner 2 is directed towards a rotating deposition target 10 for depositing soot particles thereon, so as to grow a soot preform 11. During the process, the target 10 (which is, typically, a glass core preform) is set into rotation about its longitudinal axis, here indicated with 12.

Burner 2 comprises a base 4 for receiving the required gases from the gas delivery system 3 and for fixing the burner 2 to a supporting structure (not shown), and a gas ejecting multi-pipe cylinder 5 apt to eject the gases along the direction defined by its longitudinal axis 6.

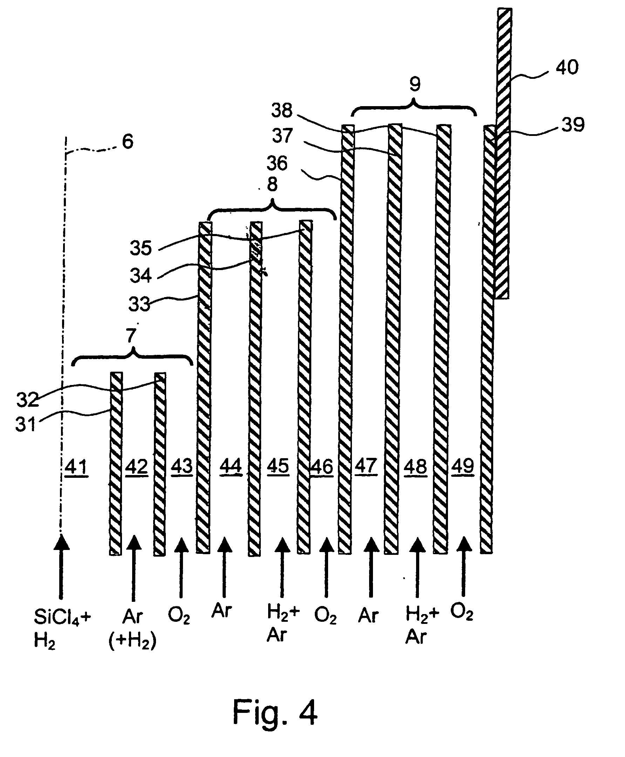

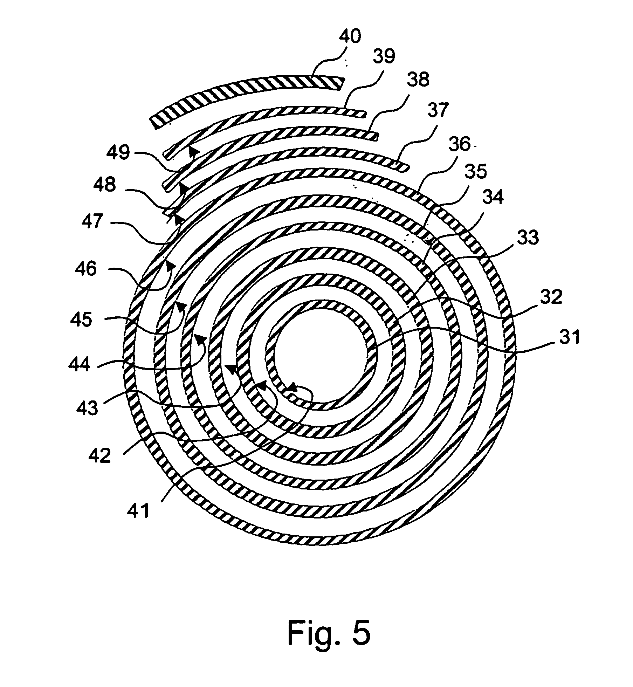

As shown in the longitudinal and cross sections of **Fig. 4** and **Fig. 5**, the cylinder 5 comprises a plurality of coaxial tubular walls (or pipes) 31-39 (progressively numbered from the internal to the external), preferably made of metal, for example AISI 303, AISI 304, AISI 310 or AISI 316L (where AISI is the acronym of American Institute Steel and Iron). Tubular wall 31 defines a first (or central) gas duct 41, of circular cross-section, while each of the other walls 32-39 defines, together with the wall it surrounds, a respective gas duct 42-49 of annular-cross section (progressively numbered from the internal to the external).

Ducts 41-49 can be grouped into a first (or inner), second (or intermediate) and third (or outer) set of ducts 7, 8, 9, which are used for generating a first, a second and a third flame, respectively. Preferably, as shown in **Fig. 4**, the ducts of the first, second and third sets 7, 8, 9 end at longitudinally spaced positions, in particular walls 33-35 end forward with respect to walls 31, 32, and walls 36-39 end forward with respect to walls 33-35. As a result, the second flame is generated at a point where the first flame has already been formed, and the third flame is generated at a point where the second flame has already been formed. In this manner, the total flame length is increased, together with the staying time of particles inside the flame.

Preferably, burner 2 further comprises an outer glass tube 40, surrounding tube 39 and ending further forward with respect to tubes 36-39 for improving directionality and confinement of the third flame. Glass is preferred in this case due to the high temperature reached by the triple-flame at the exit of the burner.

The ducts of the first set 7 are used to convey respective gases to a gas mixing point where the first flame is generated and where the reaction generating the glass soot particles starts.

In greater detail:
- the first duct 41 is used to convey a glass precursor material, preferably a silica precursor, such as SiCl₄, together with a combustible gas, such as H₂;
- the second duct 42 is used to convey an inert gas, preferably an inert gas such that the ratio between its molecular weight and the weight of the combustible gas is at least 10:1, for example Ar or, less preferably, N₂; and
- the third duct 43 is used to convey a combustion sustaining gas (herein after referred to also as an "auxiliary gas"), in particular an oxidant gas like O₂, required for the combustion of the combustible gas.

Premixing a substantial amount of the combustible gas required for the central flame with the glass precursor material and feeding the mixture to the central duct 41 results in an improvement of the glass soot synthesizing rate and the deposition rate. In fact, according to the Applicant, by generating the first flame inside the glass raw material stream, the efficiency of the soot particle formation process is increased.

Preferably, the first flame is generated by feeding to the burner 2 a glass precursor material and a combustible gas in a molar concentration ratio between about 0.8 and 1.2.

In the preferred embodiment of **Fig. 4**, the whole combustible gas of the first flame is fed to the first duct 41, in which case the molar concentration ratio between the combustible gas and the glass precursor material in the first duct 41 is between about 0.8 and 1.2. More preferably, this ratio is about 1. Feeding the whole combustible gas together with the glass precursor material to the inner duct allows having a burner of reduced dimensions, since a separate duct for the combustible gas of the inner flame is not required.

Alternatively, a fraction of the combustible gas of the first flame may be fed to the second duct 42 premixed with the inert gas, or the burner may comprise a further duct (not shown) between the first duct 41 and the second duct 42, for conveying a fraction of the combustible gas of the first flame. In these alternative embodiments, a substantial fraction of the combustible gas of the first flame, preferably more than 30% by volume, more preferably more than 60%, still more preferably more than 90%, is fed to the first duct 41, while the remaining part of the combustible gas is fed to the second duct 42 or to said further duct. Advantageously, the molar concentration ratio between the combustible gas and the glass precursor material in the first duct 41 is of at least 0.8.

Advantageously, no other gas is premixed with the glass precursor material, so that the gas mixture fed to the first duct 41 consists only of glass precursor material and combustible gas.

The flow of inert gas in the second duct 42 is required to prevent deterioration of the nozzles, which could occur if the nozzles for hydrogen gas and for oxygen gas of the inner flame were adjacently arranged.

The second set of ducts 8 comprises:
- a fourth duct 44 for an inert gas, like Ar;
- a fifth duct 45 for a combustible gas, such as H₂, premixed with a low kinematic viscosity gas, in particular an inert gas like Ar; and
- a sixth duct 46 for an auxiliary gas, in particular an oxidant gas like O₂, used for the combustion of the combustible gas.

For the purposes of the present invention, "kinematic viscosity" indicates the ratio between the viscosity and the density of the gas and a "low kinematic viscosity gas" is a gas having a kinematic viscosity lower than that of the products of combustion reaction, namely O₂ and H₂O. Since O₂ has a lower kinematic viscosity than H₂O, "low kinematic viscosity gas" here refers to a gas having a kinematic viscosity lower than that of O₂, such as Ar or Xe. Nitrogen (N₂) is less preferred but may alternatively be used. Inert gases such as helium and neon have a kinematic viscosity higher than oxygen and are therefore unsuitable for this application. The advantage of using a low kinematic viscosity gas will be described in the following.

The third set of ducts 9 is similar to the second set 8 and comprises:
- a seventh duct 47 for an inert gas, like Ar;
- a eighth duct 48 for a combustible gas, such as H₂, premixed with a low kinematic viscosity gas, like Ar; and
- a ninth duct 49 for an auxiliary gas, in particular an oxidant gas like O₂, used for the combustion of the combustible gas.

While in the burner of **Fig. 1** the inner flame has the double function of providing the energy for the glass particle formation and of confining the particle stream, in the burner of the present invention these two functions are separately performed by the inner and intermediate flame, respectively. The third flame generated by the burner of the present invention has a function corresponding to that of the second flame of the burner of **Fig. 1,** that is to improve the radial confinement of glass soot particles and guide them onto the deposition target, and also to provide a thermophoretic effect at the surface of the soot preform and to control the temperature thereon.

In the second as in the third flame, premixing an inert gas (Ar) together with the combustible gas (H₂) causes the flame to detach from the nozzles at the exit of burner's ducts, so that these nozzles do not deteriorate. Furthermore, by premixing H₂ with an inert gas it is possible to have H₂ and O₂ in two adjacent ducts, since the presence of Ar reduces sensibly the diffusion of H₂ towards the flow of O₂. This is a further advantage over the known burners, where a separate duct for the inert gas is typically set between the H₂ and O₂ ducts. As a result, the radial dimensions of the burner are reduced. In can be appreciated, in particular; that the burner of the present invention is able to produce three flames with the same number of ducts required for the burner of **Fig. 1** to produce two flames.

A more compact flame arrangement contributes to reduce the spread of the particles and consequently improves the particle collection efficiency and overall deposition yield. The soot forming reaction is therefore confined in a region of smaller radial dimensions.

Moreover, premixing a proper flow of a low kinematic viscosity gas with the combustible gas of the second and third flames determines a reduction in the flow diffusion effects that counterbalances the diffusion effects caused by turbulence. In practice, the flows of low kinematic viscosity gas within the second and third flames define respective thermophoretic confining layers providing an improved guiding effect for the inner particles. As a result, the spread of the inner flame is further reduced.

Although a triple-flame burner has been described, it can be appreciated that a burner apt to generate a higher number of flames may be realized, for example by adding to the above described structure one or more sets of ducts like sets 8, 9.

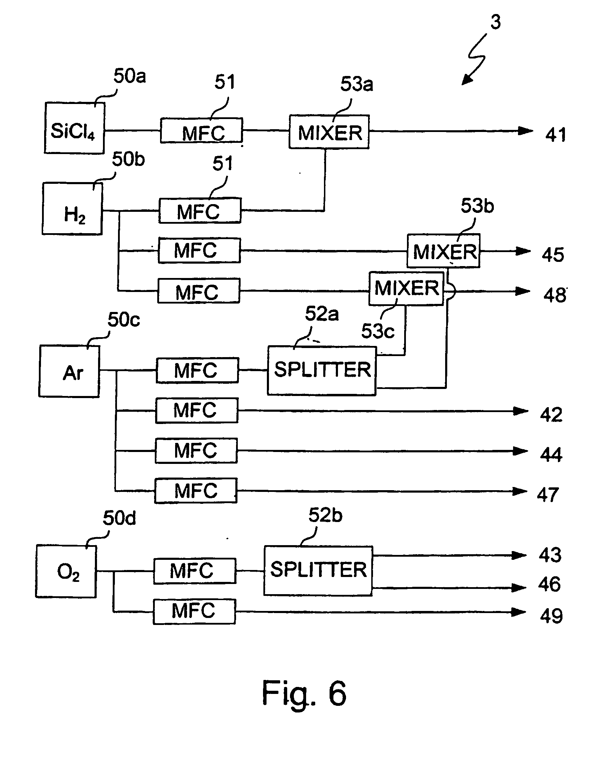

With reference to **Fig. 6**, the gas delivery system 3 may comprise a plurality of gas sources 50 to generate the different gases, a plurality of mass flow controllers (MFC) 51 for controlling the flow rates directed towards the different ducts of the burner 2, a predetermined number of gas splitters 52 for splitting the gas flows in predetermined points of the gas delivery system 3, and a predetermined number of gas mixers 53 for premixing predetermined gases before feeding to the burner 2. Gas mixers may be simply tee-pieces, in other words joins in the pipe.

In greater detail, gas sources 50 preferably comprise a source of glass precursor material 50a (such as SiCl₄), a source of combustible gas 50b (such as H₂), a source of inert gas 50c (such as Ar) and a source of auxiliary gas 50d (such as O₂). Further gas sources may be provided if different gases are required. The gas sources may be of any type known in the art.

While a single fluid connection is required for connecting the gas source 50a to the burner 2 (in particular, to the central duct 41), branched connections are provided at the exit of each of the other gas sources so as to have separate flows of the corresponding gases for the different ducts of the burner, In particular, in order to deliver the different gases to the burner as shown in **Fig. 4**, the pipe at the exit of the combustible gas source 50b has three branches, the pipe at the exit of the inert gas source 50c has four branches and the pipe at the exit of the auxiliary gas source 50d has two branches. Each delivering pipe is provided with a MCF 51, for controlling the flow of the corresponding gas.

A first gas mixer 53a is fluid connected to the glass precursor material source 50a and to the combustible gas source 50b (via a corresponding branched connection) so as to mix the glass precursor material and the combustible gas. The exit of the first gas mixer 53a is fluid connected to the central duct 41 for feeding thereto the mixture of glass precursor material and combustible gas. With "fluid connection" it is intended any physical connection by pipes or any other kind of ducts suitable to convey fluids.

The central duct 41 is the only duct of the first set of ducts 7 that is fluid connected to a source of a combustible gas.

A first gas splitter 52a has an input connected to the inert gas source 50c, and a first and a second output for providing two separate flows of the same gas. A second gas mixer 53b has a first input connected to the combustible gas source 50b and a second input connected to the first output of the first gas splitter 52a, and is apt to mix the combustible gas with the inert gas and to feed the mixture to the fifth duct 45 of burner 2. Similarly, a third gas mixer 53c has a first input connected to the combustible gas source 50b and a second input connected to the second output of the first gas splitter 52a, and is apt to mix the combustible gas and the inert gas and to feed the mixture to the eighth duct 48 of burner 2.

A second splitter 52b has an input connected to the auxiliary gas source 50d, and a first and a second output for feeding two separate flows of auxiliary gas (O₂) to the third duct 43 and to the sixth duct 46, respectively.

In the alternative embodiment wherein a fraction of the combustible gas of the first flame is fed to the second duct 42 premixed with the inert gas, a further branched connection may be provided at the exit of the combustible gas source 50b, and a further gas mixer may be provided for mixing the corresponding flow of combustible gas with the flow of inert gas directed to the second duct 42. In the further possible embodiment wherein a fraction of the combustible gas of the first flame is fed to a dedicated duct (not shown) between ducts 41 and 42, a further branched connection directly communicating with this dedicated duct may be provided at the exit of the combustible gas source 50b.

### NUMERIC SIMULATION TEST

To show the effectiveness of the process of the present invention in increasing the synthesizing rate, the Applicant has performed a numeric simulation. In this simulation, turbulence effects in the flames have been simulated by the well-known k-epsilon model described, for example, in W. *P. Jones, B. E. Launder*, *"The Prediction of Laminarization with a two-equation Model of Turbulence, Int. J. Heat and Mass Transfer, Vol. 15, p.301-314, Pergamon Press, 1972*. Moreover, the combustion reactions and the silica formation have been simulated by the well-known eddy-dissipation model described, for example, in *B. F. Magnussen, B. H. Hjertager*, *"On Mathematical Modeling of Turbulent Combustion With Special Emphasis on Soot Formation and Combustion", Proc. 16th Symposium on Combustion, p. 719, The Combustion Institute, 1976.*

In particular, the Applicant has considered a process according to the present invention, herein below identified as "A", wherein all the combustible gas of the first flame is fed to the first port of the burner admixed with the glass precursor material, and a comparative process, identified as "B", wherein the combustible gas of the first flame is fed to the second port of the burner, while the first port is fed only with glass precursor material.

In greater detail, the following tables 1 and 2 report the burner architectures and the recipes used to simulate the process according to the present invention and the comparative process, respectively. Here and in the following, "Duct" indicates the duct of the burner with the same numbering as in **Fig. 4** and **Fig. 5,** ΔL indicates the shift among the nozzles of the first, second and third set of ducts, ID and OD indicate the inner and outer diameter of the cylindrical wall corresponding to the considered burner port and slm is the measurement unit of the gas flow in "standard liters per minutes".

**TABLE 1**

| Duct | ΔL | OD | ID | SiCl₄ | H₂ | O₂ | Ar | Total |
|---|---|---|---|---|---|---|---|---|
| | (mm) | (mm) | (mm) | slm | slm | slm | slm | slm |
| 41 | 0 | 5 | 0 | 4 | 4 | | | 8 |
| 42 | 0 | 7 | 6 | | | | 1 | 1 |
| 43 | 0 | 14 | 8 | | | 12 | | 12 |
| 44 | 25 | 17 | 16 | | | | 2 | 2 |
| 45 | 25 | 22 | 19 | | 11 | | | 11 |
| 46 | 25 | 28 | 24 | | | 21 | | 21 |
| 47 | 72 | 31 | 30 | | | | 6 | 6 |
| 48 | 72 | 37 | 33 | | 44 | | 26 | 70 |
| 49 | 72 | 44 | 39 | | | 35 | | 35 |

**TABLE 2**

| Duct | ΔL | OD | ID | SiCl₄ | H₂ | O₂ | Ar | Total |
|---|---|---|---|---|---|---|---|---|
| | (mm) | (mm) | (mm) | slm | slm | slm | slm | slm |
| 41 | 0 | 5 | 0 | 4 | | | 2 | 6 |
| 42 | 0 | 9 | 6 | | 4 | | 3 | 7 |
| 43 | 0 | 14 | 11 | | | 12 | | 12 |
| 44 | 25 | 17 | 16 | | | | 2 | 2 |
| 45 | 25 | 22 | 19 | | 11 | | | 11 |
| 46 | 25 | 28 | 24 | | | 21 | | 21 |
| 47 | 72 | 31 | 30 | | | | 6 | 6 |
| 48 | 72 | 37 | 33 | | 44 | | 26 | 70 |
| 49 | 72 | 44 | 39 | | | 35 | | 35 |

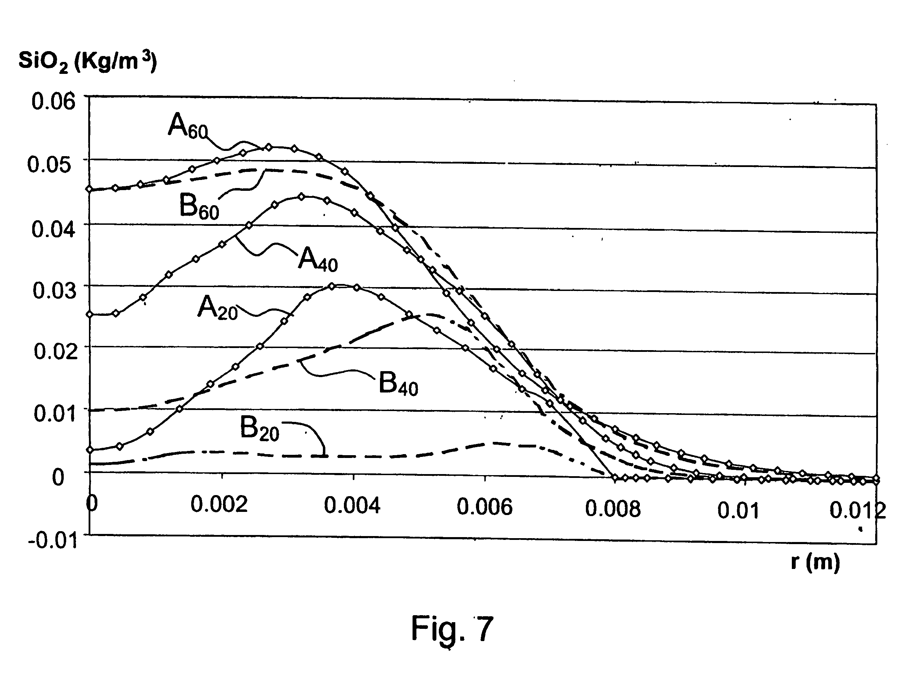

The SiO₂ concentration has been calculated at distances x₁=20 mm, x₂=40 mm and x₃=60 mm from the nozzles of the inner flame. The results are reported in Fig. 7. Curves are identified with the letter of the corresponding process (A or B) and with an index (20, 40 or 60) indicative of the distance x from the nozzles. The abscissa axis refers to the radial distance r (in meters) from the axis 6 of the burner, and the curves shall be considered symmetric with respect to the axis 6 (i.e. with respect to the axis r=0). The ordinate axis refers to the concentration of SiO₂ particles formed in the reaction.

By comparing curves A₂₀, A₄₀ and A₆₀ with the corresponding curves B₂₀, B₄₀ and B₆₀, it can be appreciated that the process according to the present invention produces a higher amount of SiO₂ close to the nozzles, in particular at 20 mm from the nozzles but also at 40 mm, while at 60 mm the production of SiO₂ is almost the same in the two cases. This is due to the improved heat transfer towards the core of the flame occurring in the burner of the present invention. In other words, the presence of combustible gas in the first duct results in the generation of the first flame within the stream of glass precursor material, and the glass transformation reaction thus starts immediately at the exit of the nozzles. The Ar flow in the second duct prevents the first flame to contact the nozzles.

### EXPERIMENTAL TESTS

### Example 1

A first set of experiments has been performed to compare the process performances when the relative amount of combustible gas in the first duct is varied.

The burner is a nine-ducts burner as previously disclosed with reference to **Figs. 2, 4 and 5**.

In a first experiment, no combustible gas is fed to the central port and the gas flows conveyed in the different ports are the following:
- as concern the first flame, 4 slm of SiCl₄ are fed to the central duct together with 2 slm of Ar, 4 slm of H₂ are fed to the second duct together with 3 slm of Ar, 12 slm of O₂ are fed to the third duct and 1.7 slm of Ar are fed to the fourth duct;
- as concern the second flame, 18 slm of H₂ are used together with 34 slm of O₂ and, to generate the third flame, 54 slm of H₂ are used together with 40 slm of O₂.

The ducts of second flame end at a point spaced 40 mm forward with respect to those of the innermost flame and the ducts of the third flame at a point spaced 75 mm further forward.

Recipe and duct dimensions of the first experiment are summarized in Table 3.

**TABLE 3**

| Duct | OD (mm) | ID (mm) | Area (mm²) | Chemical Species (slm) | | | |
|---|---|---|---|---|---|---|---|
| | | | | SiCl₄ | H₂ | O₂ | Ar |
| 41 | 5 | 0 | 19.6 | 4 | | | 2 |
| 42 | 9 | 6 | 35.3 | | 4 | | 3 |
| 43 | 14 | 10 | 75.4 | | | 12 | |
| 44 | 17 | 16 | 25.9 | | | | 1.7 |
| 45 | 22 | 19 | 96.6 | | 18 | | 3 |
| 46 | 28 | 24 | 163.4 | | | 34 | |
| 47 | 31 | 30 | 47.9 | | | | 6 |
| 48 | 37 | 33 | 219.9 | | 54 | | 12 |
| 49 | 44 | 39 | 325.9 | | | 40 | |

Soot particles are deposited for 40 min on a 40 mm diameter quartz cylinder that is axially translated at a speed of 290 mm/hr and rotated at a speed of 20 rpm. The average deposition rate is 2.15 g/min, and the efficiency is 20 %. The final diameter of the soot preform is 61.2 mm.

In a second experiment, a recipe according to the present invention is used. Here, the second and the third flame are almost the same as in the previous experiment. In detail, as far as the innermost flame is concerned, 4 slm of H₂ are fed to the central duct together with 4 slm of SiCl₄, 16 slm of O₂ are fed to the third duct to burn the combustible gas of the innermost duct and 1.5 slm of inert gas are fed to the second duct to prevent damages of burner nozzles. Recipe and duct dimensions of the second experiment are summarized in Table 4.

**TABLE 4**

| Duct | OD (mm) | ID (mm) | Area (mm²) | Chemical Species (slm) | | | |
|---|---|---|---|---|---|---|---|
| | | - | - | SiCl₄ | H₂ | O₂ | Ar |
| 41 | 5 | 0 | 19.6 | 4 | 4 | | |
| 42 | 7 | 6 | 10.2 | | | | 1.5 |
| 43 | 14 | 8 | 103.7 | | | 16 | |
| 44 | 17 | 16 | 25.9 | | | | 1.7 |
| 45 | 22 | 19 | 96.6 | | 18 | | 3 |
| 46 | 28 | 24 | 163.4 | | | 34 | |
| 47 | 31 | 30 | 47.9 | | | | 6 |
| 48 | 37 | 33 | 219.9 | | 60 | | 12 |
| 49 | 44 | 39 | 325.9 | | | 40 | |

The process is carried out for the same time and in the same conditions as the first experiment. The average deposition rate is 4.23 g/min and the efficiency 40%. The final diameter of the soot preform is 78.5 mm.

By comparing the results of the first and second experiment, it can be appreciated that, by premixing the whole quantity of combustible gas of the first flame with the glass precursor material, the deposition rate, the efficiency and the soot preform diameter increase considerably.

In a third experiment, about one-third by volume of the combustible gas amount is admixed with SiCl₄ and fed to the first port, while the remaining part is fed to the second port, thus obtaining a recipe that is intermediate between that of the first and second experiments. The corresponding recipe and duct dimensions are summarized in Table 5.

**TABLE 5**

| Duct | OD (mm) | ID (mm) | Area (mm²) | Chemical Species (slm) | | | |
|---|---|---|---|---|---|---|---|
| | | | | SiCl₄ | H₂ | O₂ | Ar |
| 41 | 5 | 0 | 19.6 | 4 | 2 | | |
| 42 | 9 | 6 | 10.2 | | 4 | | 3 |
| 43 | 14 | 10 | 103.7 | | | 12 | |
| 44 | 17 | 16 | 25.9 | | | | 1.7 |
| 45 | 22 | 19 | 96.6 | | 18 | | 3 |
| 46 | 28 | 24 | 163.4 | | | 34 | |
| 47 | 31 | 30 | 47.9 | | | | 6 |
| 48 | 37 | 33 | 219.9 | | 54 | | 12 |
| 49 | 44 | 39 | 325.9 | | | 40 | |

The process is carried out for the same time and in the same conditions as the first and second experiments. The average deposition rate is in this case 2.62 g/min and the efficiency 24.5%. The final diameter of the soot deposited onto the cylinder is 60 mm. An improvement can be observed with respect to the first experiment. However, by comparing these results with those of the second experiment, it can be observed that, by decreasing the H₂ amount from 1:1 to 1:2 with respect to SiCl₄ in the central duct and by adding a substantial amount of H₂ in the second duct, lower values of the average deposition rate, efficiency and soot preform diameter are obtained.

### Example 2

A second set of experiments has been performed to detect the dependency of the process performances on the amount of H₂ fed to the central duct. A nine-ducts burner as in Table 6 (corresponding to that of Table 4) has been used.

**TABLE 6**

| Duct | OD | ID |
|---|---|---|
| | (mm) | (mm) |
| 41 | 5 | 0 |
| 42 | 7 | 6 |
| 43 | 14 | 8 |
| 44 | 17 | 16 |
| 45 | 22 | 19 |
| 46 | 28 | 24 |
| 47 | 31 | 30 |
| 48 | 37 | 33 |
| 49 | 44 | 39 |

In a first subset of three experiments, a recipe is used as reported in Table 7, where only the stoichiometric ratio between SiCl₄ and H₂ of the first flame is varied.

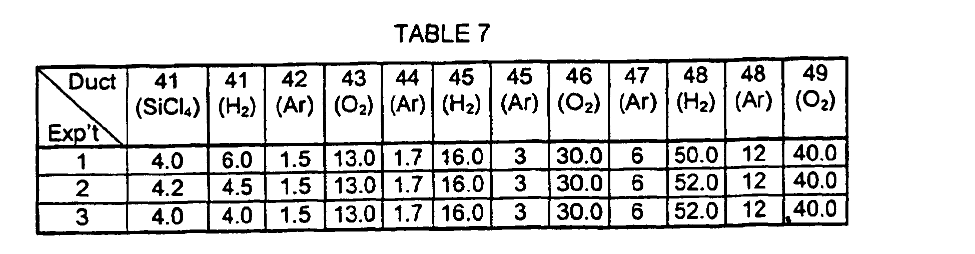

In all these experiments, deposition is carried out for 190 min by depositing glass soot on a vertical core rod having a diameter of 23 mm and subject to axial translation at a speed of 155 mm/hr and rotation about its axis at a speed of 20 rpm. The burner is angled at 30° with respect to the horizontal.

In the three experiments, the mole fraction ratio of the combustible gas to the glass precursor material is 1.5, 1.07 and 1, respectively.

Table 8 summarizes the values of deposition rate, deposition efficiency and soot diameter detected in these experiments.

**TABLE 8**

| Exp't | Molar fraction ratio H₂/SiCl₄ | Deposition Rate [g/min] | Deposit. Efficiency [%] | Soot Diameter [mm] |
|---|---|---|---|---|
| 1 | 1.5 | 3.22 | 30.0 | 77.2 |
| 2 | 1.07 | 3.66 | 32.5 | 77.7 |
| 3 | 1 | 3.87 | 36.2 | 82.2 |

It can be appreciated that, as said ratio is decreased from 1.5 to 1, the deposition rate, the deposition efficiency and the soot diameter increase.

In a second subset of experiments, a different triple flame burner is used. The dimensions of this burner are reported in Table 9.

**TABLE 9**

| Duct | OD (mm) | ID (mm) |
|---|---|---|
| 41 | 8 | 0 |
| 42 | 10 | 9 |
| 43 | 18 | 11 |
| 44 | 21 | 20 |
| 45 | 28 | 23 |
| 46 | 35 | 30 |
| 47 | 38 | 37 |
| 48 | 45 | 40 |
| 49 | 54 | 47 |

The used recipes are reported in Table 10. Once again only the inner flame combustible contempt is varied.

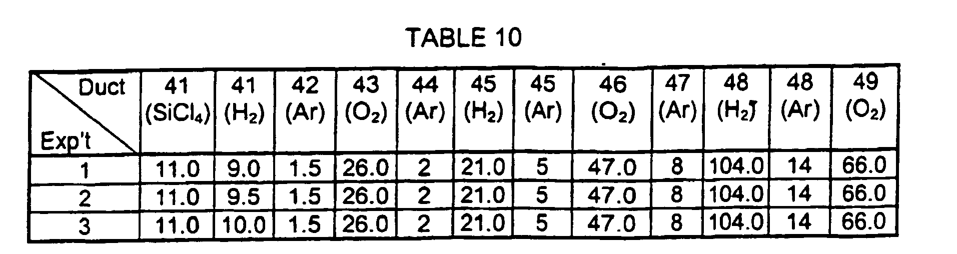

Deposition is carried out on a target tube having a diameter of 90 mm, translated at 349 mm/hr and rotated about its axis at a speed of 25 rpm. The burner is tilted at 12° with respect to the horizontal line.

Table 11 summarizes the values of deposition rate and deposition efficiency detected in these experiments.

**TABLE 11**

| Experiment | Molar fraction ratio H₂/SiCl₄ | Deposition Rate [g/min] | Deposit. Efficiency [%] |
|---|---|---|---|
| 1 | 0.82 | 15.40 | 52.3 |
| 2 | 0.86 | 15.50 | 52.6 |
| 3 | 0.91 | 15.60 | 53.0 |

It can be appreciated that the deposition rate and the deposition efficiency increase as the molar ratio between combustible gas flow rate and glass raw material flow rate increases from about 0.82 (9:11) to about 0.91 (10:11).

### Example 3

In these experiments, the Applicant has considered the influence of argon flow rates in the outer flames on the process performances.

The burner of table 9 is used. Two recipes are considered, where the flow of inert gas premixed with the combustible gas in the outer flames is varied. In particular, in the second flame 11.0 slm of H₂ are pre-mixed with 5.0 and 3.0 slm of Ar, respectively, and, in the third flame, 52 slm of H₂ are pre-mixed with 14 and 12 slm of Ar, respectively.

The results of the process are reported in table 12.

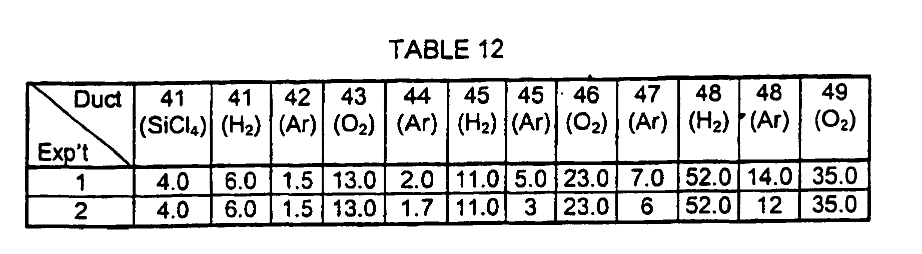

The target rod has a diameter of 23 mm and is translated at a speed of 155 mm/hr and rotated at a speed of 20 rpm. The burner is inclined at 30° with respect to the horizontal direction. Glass deposition is performed for 190 minutes.

Table 13 summarizes the values of deposition rate and deposition efficiency detected in these experiments.

**TABLE 13**

| Experiment | Deposition Rate [g/min] | Deposit. Efficiency [%] | Soot Diameter [mm] |
|---|---|---|---|
| 1 | 3.7 | 34.7 | 89.5 |
| 2 | 3.5 | 32.7 | 82.5 |

The experiments show a strong sensitivity of the process on the Ar flow rate. In particular, it can be appreciated that an increase from 3 to 5 slm and from 12 to 14 slm in the second and third flame, respectively, produces an increase of the efficiency of more than 6%.

## Claims

1. Process for producing an optical fibre glass preform, comprising:
- providing a burner in the direction of a deposition target; and
- generating, by means of said burner, at least a first flame, a second flame surrounding the first flame and a third flame surrounding the first flame, wherein generating the first flame comprises feeding to said burner predetermined amounts of a combustible gas, a combustion sustaining gas and a glass precursor material;
**characterized in that** generating the first flame comprises feeding at least 30% by volume of said predetermined amount of said combustible gas to a central duct of said burner premixed with said glass precursor material.

2. Process according to claim 1, wherein generating the first flame comprises feeding at least 60% by volume of said predetermined amount of said combustible gas to said central duct.

3. Process according to claim 2, wherein generating the first flame comprises feeding at least 90% by volume of said predetermined amount of said combustible gas to said central duct.

4. Process according to claim 3, wherein generating the first flame comprises feeding all said predetermined amount of said combustible gas to said central duct.

5. Process according to claim 1, wherein generating the first flame comprises feeding to said burner said combustible gas and said glass precursor material in a molar concentration ratio between about 0.8 and 1.2.

6. Process according to claim 1, wherein generating the first flame comprises feeding to said central duct said combustible gas and said glass precursor material in a molar concentration ratio of at least 0.8.

7. Process according to claim 6, wherein said molar concentration ratio is about 1.

8. Process according to claim 1, wherein generating the first flame further comprises feeding an inert gas to a second duct surrounding said central duct and feeding the combustion sustaining gas to a third duct surrounding said second duct.

9. Process according to claim 1, wherein generating the second flame comprises premixing a combustible gas with an inert gas having a kinematic viscosity lower than that of oxygen.

10. Process according to claim 1, wherein generating the third flame comprises premixing a combustible gas with an inert gas having a kinematic viscosity lower than that of oxygen.

11. Burner assembly (1) for generating a glass soot particle stream in a process for producing a glass optical fibre preform, comprising:
- a burner (2) having a first, a second and a third set (7, 8, 9) of ducts for generating an inner, an intermediate and a outer flame, respectively;
- a gas delivery system (3), comprising a source of a glass precursor material (50a), a source of a combustible gas (50b) and a source of a combustion sustaining gas (50c), and further comprising a mixer (53a) for forming a mixture of said glass precursor material and said combustible gas, said mixer (53a) being fluid connected to a central duct (41) of said burner (2) for feeding to said central duct (41) said mixture.

12. Burner assembly (1) according to claim 11, wherein said central duct (41) is the only duct of said first set of ducts (7) that is fluid connected to a source of a combustible gas.

## Patentansprüche

1. Verfahren zum Herstellen einer optischen Glasfaser-Vorform mit:
- Bereitstellen eines Brenners in der Richtung eines Ablagerungstarget, und
- Erzeugen zumindest einer ersten Flamme, einer zweiten Flamme, die die erste Flamme umgibt, und einer dritten Flamme, die die erste Flamme umgibt, mittels des Brenners, wobei Erzeugen der ersten Flamme ein Zuführen vorbestimmter Mengen brennbaren Gases, eines die Verbrennung unterstützenden Gases und eines Glasvorläufermaterials umfasst,
**dadurch gekennzeichnet, dass** Erzeugen der ersten Flamme ein Zuführen von zumindest 30 Volumen-% der vorbestimmten Menge des brennbaren Gases zu einer zentralen Leitung des Brenners umfasst, das mit dem Glasvorläufermaterial vorgemischt ist.

2. Verfahren nach Anspruch 1, wobei Erzeugen der ersten Flamme ein Zuführen von zumindest 60 Volumen-% der vorbestimmten Menge des brennbaren Gases zu der zentralen Leitung umfasst.

3. Verfahren nach Anspruch 2, wobei Erzeugen der ersten Flamme ein Zuführen von zumindest 90 Volumen-% der vorbestimmten Menge des brennbaren Gases zu der zentralen Leitung umfasst.

4. Verfahren nach Anspruch 3, wobei Erzeugen der ersten Flamme ein Zuführen der gesamten vorbestimmten Menge des brennbaren Gases zu der zentralen Leitung umfasst.

5. Verfahren nach Anspruch 1, wobei Erzeugen der ersten Flamme ein Zuführen des brennbaren Gases und des Glasvorläufermaterials in einem molaren Konzentrationsverhältnis zwischen etwa 0.8 und 1,2 zum Brenner umfasst.

6. Verfahren nach Anspruch 1, wobei Erzeugen der ersten Flamme ein Zuführen des brennbaren Gases und des Glasvorläufermaterials in einem molaren Konzentrationsverhältnis von zumindest 0,8 zu der zentralen Leitung umfasst.

7. Verfahren nach Anspruch 6, wobei das molare Konzentrationsverhältnis etwa 1 ist.

8. Verfahren nach Anspruch 1, wobei Erzeugen der ersten Flamme ferner ein Zuführen eines Inertgases zu einer zweiten Leitung, die die zentrale Leitung umgibt, und ein Zuführen eines die Verbrennung unterstützenden Gases zu einer dritten Leitung umfasst, die die zweite Leitung umgibt.

9. Verfahren nach Anspruch 1, wobei Erzeugen der zweiten Flamme ein Vormischen eines brennbaren Gases mit einem Inertgas umfasst, das eine kinematische Viskosität aufweist, die kleiner als die von Sauerstoff ist.

10. Verfahren nach Anspruch 1, wobei Erzeugen der dritten Flamme ein Vormischen eines brennbaren Gases mit einem Inertgas umfasst, das eine kinematische Viskosität aufweist, die kleiner als die von Sauerstoff ist.

11. Brenneranordnung (1) zum Erzeugen eines Glasrußteilchenstroms in einem Verfahren zum Herstellen einer optischen Glasfaser-Vorform, mit:
- einem Brenner (2), der einen ersten, einen zweiten und einen dritten Satz (7, 8, 9) von Leitungen zum Erzeugen einer inneren, einer mittleren bzw. einer äußeren Flamme aufweist;
- einem Gaszuführsystem (3), das eine Quelle eines Glasvorläufermaterials (50a), eine Quelle eines brennbaren Gases (50b) und eine Quelle eines die Verbrennung unterstützenden Gases (50c) sowie ferner einem Mischer (53a) zum Bilden einer Mischung aus dem Glasvorläufermaterial und dem brennbaren Gas umfasst, wobei der Mischer (53a) strömungsmäßig mit einer zentralen Leitung (41) des Brenners (2) zum Zuführen der Mischung zu der zentralen Leitung (41) verbunden ist.

12. Brenneranordnung (1) nach Anspruch 11, wobei die zentrale Leitung die einzige Leitung des ersten Satzes von Leitungen (7) ist, die strömungsmäßig mit einer Quelle des brennbaren Gases verbunden ist.

## Revendications

1. Procédé de production d'une préforme en verre pour fibre optique, comprenant la disposition d'un brûleur en direction d'une cible de dépôt, et la production, au moyen dudit brûleur, d'au moins une première flamme, une seconde flamme entourant la première flamme et une troisième flamme entourant la seconde flamme, la production de la première flamme comprenant l'introduction dans ledit brûleur de quantités fixées à l'avance d'un gaz combustible, d'un gaz entretenant la combustion et d'un produit précurseur de verre,
procédé **caractérisé en ce que** la production de la première flamme comprend l'introduction dans un conduit central dudit brûleur, d'au moins 30 % en volume de ladite quantité fixée à l'avance dudit gaz combustible, mélangés au préalable avec ledit produit précurseur de verre.

2. Procédé selon la revendication 1, dans lequel la production de la première flamme comprend l'introduction dans ledit conduit central, d'au moins 60 % en volume de ladite quantité fixée à l'avance dudit gaz combustible.

3. Procédé selon la revendication 2, dans lequel la production de la première flamme comprend l'introduction dans ledit conduit central, d'au moins 90 % en volume de ladite quantité fixée à l'avance dudit gaz combustible.

4. Procédé selon la revendication 3, dans lequel la production de la première flamme comprend l'introduction dans ledit conduit central, de toute ladite quantité fixée à l'avance dudit gaz combustible.

5. Procédé selon la revendication 1, dans lequel la production de la première flamme comprend l'introduction dans ledit brûleur, dudit gaz combustible et dudit produit précurseur de verre selon un rapport des concentrations molaires compris entre environ 0,8 et environ 1,2.

6. Procédé selon la revendication 1, dans lequel la production de la première flamme comprend l'introduction dans ledit conduit central, dudit gaz combustible et dudit produit précurseur de verre selon un rapport des concentrations molaires d'au moins 0,8.

7. Procédé selon la revendication 6, dans lequel ledit rapport des concentrations molaires est d'environ 1.

8. Procédé selon la revendication 1, dans lequel la production de la première flamme comprend en outre l'introduction d'un gaz inerte dans un second conduit entourant ledit conduit central et l'introduction du gaz entretenant la combustion dans un troisième conduit entourant ledit second conduit.

9. Procédé selon la revendication 1, dans lequel la production de la seconde flamme comprend le mélange préalable d'un gaz combustible avec un gaz inerte ayant une viscosité cinématique inférieure à celle de l'oxygène.

10. Procédé selon la revendication 1, dans lequel la production de la troisième flamme comprend le mélange préalable d'un gaz combustible avec un gaz inerte ayant une viscosité cinématique inférieure à celle de l'oxygène.

11. Dispositif à brûleur (1) pour produire un courant de particules de suie de verre dans un procédé de production d'une préforme pour fibre de verre optique, qui comprend :
- un brûleur (2) ayant un premier groupe, un second groupe et un troisième groupe (7,8,9 respectivement) de conduits pour produire respectivement une flamme interne, une flamme intermédiaire et une flamme externe,
- un système (3) de fourniture de gaz, comprenant une source (50a) d'un produit précurseur de verre, une source (50b) d'un gaz combustible et une source (50d) d'un gaz entretenant la combustion, et comprenant en outre un mélangeur (53a) pour former un mélange dudit produit précurseur de verre et dudit gaz combustible, ledit mélangeur (53a) étant relié à un conduit central (41) dudit brûleur (2) pour l'introduction dudit mélange dans ledit conduit central (41).

12. Dispositif à brûleur (1) selon la revendication 11, pour lequel ledit conduit central (41) est le seul conduit dudit premier groupe de conduits (7) qui est en liaison avec une source de gaz combustible.
